(19) Europäisches Patentamt
European Patent Office
Office européen des brevets

(11) **EP 4 296 684 A1**

(12) **EUROPEAN PATENT APPLICATION**

(43) Date of publication:
**27.12.2023 Bulletin 2023/52**

(21) Application number: **22179855.6**

(22) Date of filing: **20.06.2022**

(51) International Patent Classification (IPC):
**G01N 35/10** $^{(2006.01)}$     **B01L 3/02** $^{(2006.01)}$
**G01F 23/14** $^{(2006.01)}$

(52) Cooperative Patent Classification (CPC):
**G01N 35/1011; B01L 3/0217; G01F 23/168;
G01N 35/1016;** G01N 2035/1025; G01N 2035/1053

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Tecan Trading AG
8708 Männedorf (CH)**

(72) Inventors:
- **SCHILLING, Oliver
51429 Bergisch Gladbach (DE)**
- **MAURER, Dominik
8610 Uster (CH)**
- **HAUSHERR, Christoph
8053 Zürich (CH)**

(74) Representative: **Qip Patentanwälte
Dr. Kuehn & Partner mbB
Goethestraße 8
80336 München (DE)**

(54) **LIQUID INTERFACE ESTIMATION FOR LIQUID ASPIRATION**

(57)    A method for aspirating a first liquid medium (20a) from a sample container (18) with a laboratory automation device (10), wherein the first liquid medium (20a) is above a second liquid medium (20b), which has a higher density and/or viscosity as the first liquid medium (20a) comprises: detecting a surface position (zo) of a surface (24) of the first liquid medium (20a); calculating an estimated interface position (zi) of an interface (22) between the first liquid medium (20a) and the second liquid medium (20b) from the surface position (zo) and calculating a safety position (zs) between the surface position (zo) and the estimated interface position (zi) by adding a safety offset ($d_1$, $d_2$) to the estimated interface position ($z_l$); and lowering a pipette (14) of the laboratory automation device (10) into the sample container (18) and aspirating the first liquid medium (20a) from the sample container (18) with the pipette (14) by generating an underpressure in the pipette until a pipette tip (16) of the pipette (14) reaches the safety position (zs).

Fig. 2

## Description

FIELD OF THE INVENTION

The invention relates to a method, a computer program and a computer-readable medium for aspirating a first liquid medium of two liquid media of different density and/or viscosity from a sample container. Furthermore, the method relates to a laboratory automation device.

BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analysed by means of a biochemical procedure. Such a procedure consists in various operations like adding substances, incubating, separating, etc. and a measurement process which quantitatively or qualitatively measures the amount or presence of a substance indicating the specific disease.

In specific procedure it is necessary to separate two different liquid media of different density and/or viscosity. Such liquid media usually separate themselves, for example due to gravity or a centrifuge, in different layers in a sample container. In this case, the interface between the two liquid media has to be detected and the laboratory automation devices then can aspirate one of the liquid media with a pipette.

For example, in prenatal studies and cancer studies, diagnostic methods aim to extract circulating tumour cells and cell-free DNA from blood plasma/serum of centrifuged blood samples. For this application, the extracted serum should not be contaminated with red blood cells (i.e. erythrocytes) and white blood cells.

For determining the interface between blood plasma and erythrocytes, there are laser-based measurements in the NIR (Near Infrared) range of the spectrum, which determine the interface with light. However, non-transparent sample containers may cause problems. Other systems are based on imaging in the visible range of the spectrum. However, specific illumination is required and sample containers provided with stickers may cause problems.

US 2012/003731 A1 describes a method for determining an interface between blood plasma and blood cells. A pipette is lowered in a sample container and the interface is detected based on pressure changes in the pipette.

DESCRIPTION OF THE INVENTION

When determining an interface between a first and a second liquid media based on pressure analysis within a pipette, there may be the problem that the interface is only detected after some of the second liquid media already have reached the interior of the pipette. This may be aggravated by a laminar flow of second liquid media within the first liquid media in the pipette tip. However, sometimes it is desired that no second liquid media is aspirated at all. Furthermore, bubbles may cause pressure changes, which can misinterpreted as the detection of the interface.

It is an objective of the invention to provide a simple, reliable and exact method for aspirating a first liquid medium of two liquid media of different density and/or viscosity from a sample container without contaminating the first aspirated liquid medium with the second liquid medium. The method may be adapted to more than two different liquid media.

This objective is achieved by the subject-matter of the independent claims. Further exemplary embodiments are evident from the dependent claims and the following description.

A first aspect of the invention relates to a method for aspirating a first liquid medium of the two liquid media of different density and/or viscosity from the sample container. The first liquid medium is above a second liquid medium, which has a higher density and/or viscosity as the first liquid medium. The sample container may be a sample tube or a well of a microplate, for example according to ANSI (American National Standards Institute)/SLAS Microplate Standards 1 to 4 - 2004.

The method may be performed automatically by a laboratory automation device and in particular a controller of the laboratory automation device. A controller of a laboratory automation device, which controller is adapted for performing the method, also is a further aspect of the invention.

A liquid medium may be a fluid which is nearly uncompressible. A liquid medium may be a liquid and/or paste-like substance. At least, a liquid medium is adapted for being aspirated by a pipette of the laboratory automation device. Examples for liquid media are aqueous solutions, organic solvents, oil solutions, blood plasma, separated blood cells, precipitated proteins, gels, slurries of particles, etc. In particular, the method may be used for separating blood plasma from centrifuged blood cells and for liquid-liquid extraction.

According to an embodiment of the invention, the method comprises: detecting a surface position of a surface of the first liquid medium; calculating an estimated interface position of an interface between the first liquid medium and the second liquid medium from the surface position and/or the geometry of the sample container and calculating a safety position between the surface position and the estimated interface position by adding a safety offset to the estimated interface position; lowering a pipette of the laboratory automation device into the sample container and aspirating the first liquid medium from the sample container with the pipette by generating an underpressure in the pipette until a pipette tip of the pipette reaches the safety position.

The surface of the first liquid medium may be the interface between the first liquid medium and air. The surface may be detected with the aid of the pipette tip or otherwise e.g. by imaging. In general, all positions may be provided as z-coordinate of a coordinate system, in which the z-axis is perpendicular and/or in parallel to a vertical extension direction of the sample container.

From a known height and/or shape of the sample container, the overall volume of liquids in the sample container may be determined and therefrom the estimated interface position between the first liquid medium and the second liquid medium may be calculated. Here, it may be assumed that a specific volume relationship between the two liquid media is given. The safety position is then an offset above the estimated interface position, which offset may depend on the overall volume and/or a fixed distance.

When the safety position is known, the first liquid medium above the safety position is aspirated from the sample container. In laboratory automation procedures, there are several liquid combinations, such as centrifuged blood samples, which usually have a fixed volume ratio. For example, centrifuged blood samples, which contain plasma as first liquid medium and red blood cells as second liquid medium, in average nearly always have a volume ratio of 55% to 45% between plasma and blood cells. The ratio is also depending on age, gender and health condition of the patient or blood donor. When the plasma is solely aspirated to a safety position above the estimated interface position, the chances are very high that no or nearly no blood cells are aspirated, which may be enough for specific types of procedures. Furthermore, aspirating without interface detection may reduce the number of false detections.

Aspirating may be performed by applying an underpressure to the interior of the pipette. For this, a pump, such as a plunger or in general negative pressure source, may be used, which is connected to the pipette.

The pipette tip may be moved and/or lowered along the vertical direction. The vertical direction may be defined as a direction orthogonal to a plane of the surface and/or interface. This plane may adjust itself orthogonal to a direction of gravity. It may be that the movement of the pipette tip has components different from the vertical direction. For example, the pipette tip may be moved along a path inclined with respect to the vertical direction.

Lowering may be from top to bottom of the sample container. Aspiration may start, when an air-liquid-interface, i.e. the surface, is detected with the pipette tip. This may be done with the measurement of the change in capacitance between air and the liquid measurement, for example.

It may be that the pipette tip is moved and that the container rests at the same position. It also may be that the container is moved, while the pipette tip stays at the same position. When the container is moved towards the pipette, this also may be seen as lowering the pipette.

According to an embodiment of the invention, the estimated interface position and/or the safety position is calculated by applying a mathematical formula to the measured surface position. The mathematical formula may be implemented in the controller performing the method with fixed parameters. The surface position is input into the mathematical formula, which outputs the estimated interface position and/or the safety position.

The estimated interface position may be linearly dependent on the surface position. A basic value may be subtracted from the surface position and the result may be multiplied with a percentage factor. For example, the basic value may correspond to a non-cyclindrical part of the sample container, such as a hemispherical bottom of a vial. This may be used for sample containers with substantially cylindrical shape and/or any container with a flat bottom and walls perpendicular to the bottom. For more complicated shapes, more complicated formulas may be used. The basic value, the percentage factor and/or other parameters of the mathematical formula may be provided as fixed values in the controller. These parameters may be determined in experiments and/or may be provided for specific types of liquid combinations.

According to an embodiment of the invention, the safety offset comprises a statistical offset depending on the surface position. The statistical offset may be calculated from the overall volume and/or the surface position. The one or more parameters for the statistical offset (such as a factor multiplied with the overall volume and/or the surface position) may be determined by experiments and/or may depend on a variance of measured interface positions.

According to an embodiment of the invention, the safety offset comprises a constant offset. This constant offset may be chosen in dependence of the type of sample container and/or may relate to a distance above the interface position, which ensures a safe performance of an interface detection (see below).

According to an embodiment of the invention, the surface position of the surface of the first liquid medium is detected capacitively via the pipette tip and/or by measuring a change of pressure by a pressure sensor via the pipetting tip, which is lowered towards the surface. As already mentioned, this may be done with the measurement of the change in capacitance between air and the liquid measurement, when the pipette tip is lowered towards the surface.

According to an embodiment of the invention, the method comprises: during lowering, when the safety position has been reached, measuring a pressure in the pipette and detecting a measured interface position of the interface, when a slope of the pressure changes. After the safety position has been reached, the remaining amount of first liquid may be aspirated. However, in this case, the interface has to be detected, such that aspiration can be stopped then.

The interface between the two liquid media may be a phase border and/or a layer between the two liquid media. Geometrically seen, the interface may be a substantially planar area between the two volumes of the two liquid media. When the pipette tip passes the interface, the type of liquid media changes and therefore also the viscosity. This results in a change of the pressure slope of the pressure of an air cushion inside the pipette and/or inside the hose. In particular, when the pump or a similar device pump with a constant volume rate, i.e. the amount of fluid removed or added from a volume, to which the pipette is connected, is removed or added with a constant rate, the pressure has a constant slope, when the viscosity of the aspirated liquid media is the same. When the viscosity changes, the pressure slope also changes, which can be measured with a pressure sensor connected to a volume to which the pipette and the pressure device are connected.

From the pressure signal over time, the slope of the pressure signal over time can be determined and therefrom a point of a slope change can be determined. The position of the interface then can be determined as the position of the pipette tip, where the slope change has happened.

It also may be that after the interface is detected, the pipette tip is moved up for a specific (in particular small) distance and that then a (in particular small) quantity of the liquid medium there is aspirated, to be sure that nothing of the other, second liquid medium leaks when the pipette is retreated from the sample container.

During interface detection, the movement speed of the pipette may be at least 10% faster, in particular 2 to 5 times faster (or more) than the movement speed of the liquid level and/or surface of the first liquid medium. During aspiration without interface detection (also before the safety position has been reached), the movement speed of the pipette may be as fast as the movement speed of the liquid level

With a large movement speed of the pipette during interface detection, i.e. before the pipette is stopped, it may be circumvented that under special circumstances (like a laminar flow in the pipette tip), a large quantity of second liquid medium enters the pipette and the second liquid medium is still not detected.

According to an embodiment of the invention, the method comprises: providing a plausibility message for the interface detection, when a difference of the estimated interface position and the measured interface position is higher than a threshold. This message may be output by the laboratory automation device and/or the sample container may be marked as problematic, such that it is investigated by an operator of the laboratory automation device later. The threshold may be fixed and/or may depend on the measured surface position.

According to an embodiment of the invention, the method comprises: after detection of the measured interface position, stopping the pipette tip at the detected position and generating overpressure to dispense an amount of the second aspirated liquid medium and/or an amount of the first aspirated liquid medium from the pipette. In such a way, it can be ensured that solely first liquid medium is present in the pipette, when it is dispensed. The amount of second aspirated liquid medium may be returned into the volume of the second liquid medium inside the sample container. After that, the pipette may be removed from the sample container containing solely the first liquid medium. The first liquid medium remaining in the pipette may be dispensed into the further sample container.

According to an embodiment of the invention, the method comprises: after detection of the measured interface position, withdrawing the pipette from the sample container and discarding an amount of liquid medium from the pipette such that an aspirated amount of second liquid medium is discarded. It also may be that additionally a small quantity of the first liquid medium is discarded afterwards.

Since the interface is detected after the second liquid medium has entered the pipette, it may be necessary to remove the second liquid medium from the pipette. The aspirated amount of second liquid medium may be dispensed in a waste container or the whole aspirated volume comprising the first and the second liquid may be discharged in a waste container. Dispensing in general may be performed by generating an overpressure in the pipette. The first liquid medium remaining in the pipette may be dispensed into the further sample container.

According to an embodiment of the invention, the method comprises: before the safety position is reached, aspirating the first liquid medium from the sample container in several passes, wherein during each pass, an aspiration volume is aspirated from the sample container and dispensed into a further sample container.

The volume between the safety position and the estimated interface position may be smaller than an aspiration volume for a pass. The lowering of the pipette performing of interface detection and aspiration, after the safety position has been reached, also may be seen as a pass. In this pass, a detection of the interface is expected.

The aspiration volume may be a maximal volume that can be aspirated by the pipette, i.e. until the pipette tip is completely filled. The aspiration volume of the pipette may be the volume up to which the pipette tip is designed to be filled. The aspiration volume also may be a volume smaller than the maximal volume of the pipette tip. The aspiration volume, in particular for the last pass before the safety position is reached, may be reduced, such that solely liquid medium up to the safety position is aspirated.

According to an embodiment of the invention, the method comprises: before the safety position is reached, measuring a pressure in the pipette during the lowering of the pipette and detecting a measured interface position of the interface, when a slope of the pressure changes. It also may be that interface detection is performed before the safety position has been reached. In such a way, the estimation of the interface position may be used as plausibility check. Furthermore, it may be prevented that the interface is at a position, where one pass stops and the next one starts, since the passes are adapted to the safety position.

According to an embodiment of the invention, the method comprises: providing a plausibility message for the interface detection, when the measured interface position is detected, before the safety position is reached. This message may be output by the laboratory automation device and/or the sample container may be marked as problematic, such that it is investigated by an operator of the laboratory automation device later.

According to an embodiment of the invention, during each pass, the pipette is lowered into the sample container until the pipette tip has passed a lowering distance, which is chosen, such that the pipette tip passes the aspiration volume in the sample container. The lowering distance from the surface of the first liquid medium, which corresponds to the aspiration volume, may be calculated from a known horizontal area of the sample container. The lowering distance may be the aspiration volume divided by the horizontal area, wherein after that, an offset may be added to the lowering distance, such that a volume of first liquid medium may stay above the pipette tip, when the aspiration volume has been aspirated from the sample container.

It may be that a first aspiration rate during the lowering of the pipette for the lowering distance is lower than a second aspiration rate, after the lowering distance has been passed. In such a way, interface detection can be performed with a low aspiration rate. The first aspiration rate may be adjusted for interface detection. This may be done with a lower aspiration rate as during pure aspiration without pipette movement and/or interface detection. The amount of liquid media, which is aspirated during the measurement process, may be (in particular much) smaller than the amount, which is aspirated, when the lowering distance has been passed and/or when the pipette tip is stopped.

According to an embodiment of the invention, the aspiration volume and/or a lowering distance of the pipette tip for each pass are chosen in dependence of the safety position. In such a way, the last pass with interface detection can be started at the safety position.

A further aspect of the invention relates to a computer program for aspirating a first liquid medium from two liquid media, which computer program, when being executed by a processor, is adapted to carry out the steps of the method as described above and below. The computer program may be executed in a computing device, such as a controller of the laboratory automation device and/or a PC, which may be communicatively interconnected with the laboratory automation device. It also is possible that the method is performed by an embedded microcontroller of the laboratory automation device.

A further aspect of the invention relates to a computer-readable medium, in which such a computer program is stored. A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet and/or a cloud storage, which allows downloading a program code. In general, the computer-readable medium may be a non-transitory or transitory medium.

A further aspect of the invention relates to a laboratory automation device.

According to an embodiment of the invention, the laboratory automation device comprises a pipetting arm for carrying a pipette; a device for changing a pressure in a volume connected to the pipette for aspirating and dispensing a liquid medium in the pipette; a pressure sensor for pressure measurements in the volume connected to the pipette and a control device for controlling the device and the pipetting arm and for receiving a pressure signal from the pressure sensor, wherein the control device is adapted for performing the method as described above and below.

It has to be understood that features of the method as described in the above and in the following may be features of the control device, the computer program and the computer-readable medium as described in the above and in the following and vice versa.

These and other aspects of the invention will be apparent from and elucidated with reference to the embodiments described hereinafter.

BRIEF DESCRIPTION OF THE DRAWINGS

Below, embodiments of the present invention are described in more detail with reference to the attached drawings.

Fig. 1 schematically shows a laboratory automation device according to an embodiment of the invention.

Fig. 2 shows a sample container and illustrates a method for determining an estimated interface position according to an embodiment of the invention.

Fig. 3 shows a flow diagram for a method for aspirating a liquid medium according to an embodiment of the invention.

Fig. 4 shows a diagram with a pressure over time generated during a method according to an embodiment of the invention.

The reference symbols used in the drawings, and their meanings, are listed in summary form in the list of reference symbols. In principle, identical parts are provided with the same reference symbols in the figures.

## DETAILED DESCRIPTION OF EXEMPLARY EMBODIMENTS

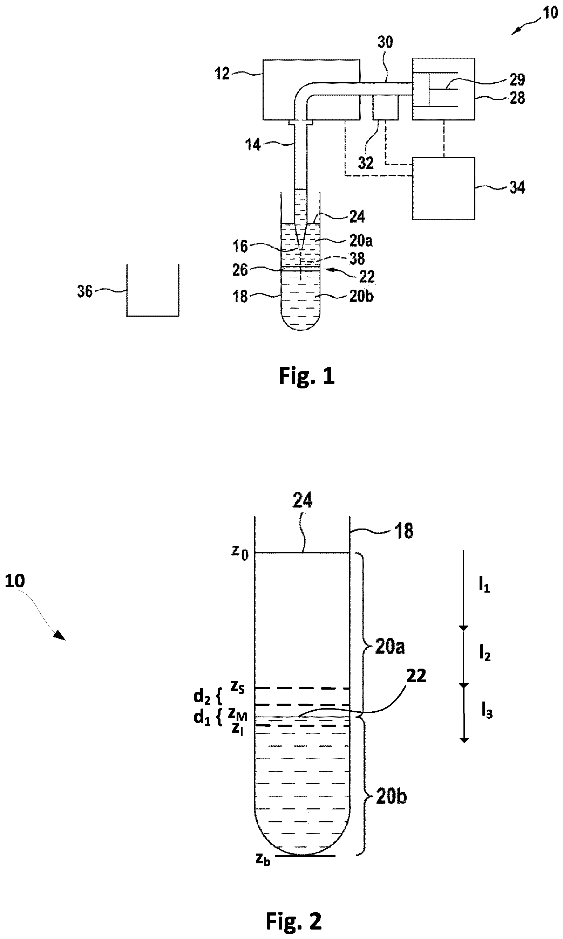

Fig. 1 schematically shows a laboratory automation device 10, which comprises an automatically movable pipetting arm 12 to which a pipette 14 is attached. As shown in Fig. 1, the pipette tip 16 of the pipette 14 may be lowered into a sample container 18 via the movable pipetting arm 12. For example, the container 18 may be a test tube with a centrifuged blood sample.

The pipetting arm 12 may move the pipette 14 and the pipette tip 16 in three dimensions, may lower the pipette tip 16 into the sample container 18 and may retract the pipette tip 16 therefrom.

In the sample container 18, liquid media 20a, 20b are contained, which have a different density and/or viscosity and which separate themselves in a vertical direction, for example under gravity or centrifugal forces. The two liquid media 20a, 20b are separated by an interface 22. The interface 22 may be seen as a layer or plane between the liquid media 20a, 20b. It has to be noted that there is surface or air/liquid interface 24, which is present between the liquid media 20a and the air of the environment.

For example, the first liquid media 20a may be blood plasma and the second liquid media 20b may contain blood cells, such as red and white blood cells. As shown in Fig. 1, the red and white blood cells also may be separated from each other and the white blood cells may form a small layer 26 between the plasma and the red blood cells. This layer 26 may be seen as a part of the interface 22.

As a further example, the two liquid media 20a, 20b may be two unmixable liquids, which are used for liquid-liquid extraction.

The laboratory automation system 10 furthermore comprises a pump 28, which is connected via a hose 30 with the pipette 14. With the pump 28, a pressure may be applied to the hose 30 and to the pipette 14, or more general to a volume 30 connected with the pipette 14, which causes the pipette 14 to aspirate or dispense a liquid medium 20a, 20b or any other fluid. For example, the pump 28 comprises a plunger 29, which is moved for generating underpressure and overpressure in the hose 30 and the pipette 14. Any other kind of pumps, e.g. peristaltic pumps or in general any source of vacuum and pressure may be used. The source of vacuum and pressure may be controlled via valves.

A pressure sensor 32, which may be attached to the hose 30 and/or the pipette 14, is adapted for measuring a pressure in the hose 30 and/or the pipette 14.

A control device 34 of the laboratory automation device 10, which may be a part of the laboratory automation device 10 or connected thereto, may control the pipetting arm 12, the pump 28 and may receive a pressure signal from the pressure sensor 32.

In general, liquid may be aspirated from the sample container 18 with the pipette 14 by generating an underpressure in the pipette 14, wherein the first liquid medium 20a of the two liquid media is aspirated and - after the interface 22 and the pipette tip 16 pass each other - the second liquid medium 20b of the two liquid media is aspirated.

It may be that a pressure in the pipette 14 is measured with the pressure sensor 32, while the pipette tip 16 and the interface 22 move with respect to each other and the position of the interface 22 is detected, when a slope of the pressure changes.

Fig. 1 also shows a further sample container 36 into which the first liquid medium 20a will be dispensed as described below.

Fig. 2 shows the sample container 18 and illustrates a method for determining an estimated interface position $z_i$ of the interface 22 between the first liquid medium 20a and the second liquid medium 20b. The method may be performed by the laboratory automation device 10 controlled by the control device 34.

At first, a surface position $z_0$ of the surface 24 of the first liquid medium 20a is detected. This may be done by lowering the pipette 14 into the sample container and detecting the surface position $z_0$ capacitively via the pipette tip 16 or by measuring a change of pressure by a pressure sensor via the pipetting tip, which is lowered towards the surface 24. The surface position $z_0$ may be provided as a z-coordinate in vertical direction.

From the surface position $z_0$, an estimated interface position $z_i$ of the interface 22 between the first liquid medium 20a and the second liquid medium 20b is calculated and therefrom a safety position $z_s$ is calculated, which is between the surface position $z_0$ and the estimated interface position $z_i$.

The estimated interface position $z_i$ is calculated by applying a mathematical formula to the surface position $z_0$, such as

$$z_i = p\,(z_0 - z_b) + z_b$$

which applies to cylindrical sections of the sample container 18. $z_b$ is a base value, such as the position of the bottom of the sample container 18, and p may be a percentage value, such as 55% in the case of centrifuged blood sample. The estimated interface position $z_s$ may be linearly dependent on the surface position $z_0$ in case of a cylindric container or any container with a flat bottom and walls perpendicular to the bottom. However, in case of a sample container 18 with a more complicated shape, also more complicated formulas may be used.

As a further example, for a round bottom tube, i.e. a container with circular cross-section with radius r and a hemispherical bottom cap, also with radius r, the interface position may be calculated by

$$z_i = p\,[\,(z_0 - z_b) - r/3\,] + r/3 + z_b$$

wherein $z_b$ is the coordinate of the bottom of the round bottom tube.

The parameters of the mathematical formula, such as $z_b$ and p, may be provided in the controller 34 and may be fixed with respect to the assay procedure.

The safety position zs is calculated by adding one or more safety offsets di, $d_2$ to the estimated interface position zi.

$$z_S = z_I + d_1 + d_2$$

The statistical offset di may depend on the surface position $z_0$, such as

$$d_1 = z_I * s$$

where s is a constant value, which may depend on a variance of the interface position within the context of the application.

There also may be a constant offset $d_2$, which for example is chosen, such that an interface detection by pressure measurements works properly, when starting from the safety position zs.

After the estimation process, the aspiration process starts. The pipette 14 of the laboratory automation device 10 is lowered into the sample container 18 and the first liquid medium 20a. The pipette tip 16 may be moved along a vertical direction, however, more complicated paths 38 (see Fig. 1) are possible, which may have components in a horizontal direction and/or inclined sections. The first liquid medium 20a is aspirated from the sample container 18 with the pipette 14 by generating an underpressure in the pipette until the pipette tip 16 of the pipette 14 reaches the safety position zs. During this first aspiration process, an interface detection may take place or not.

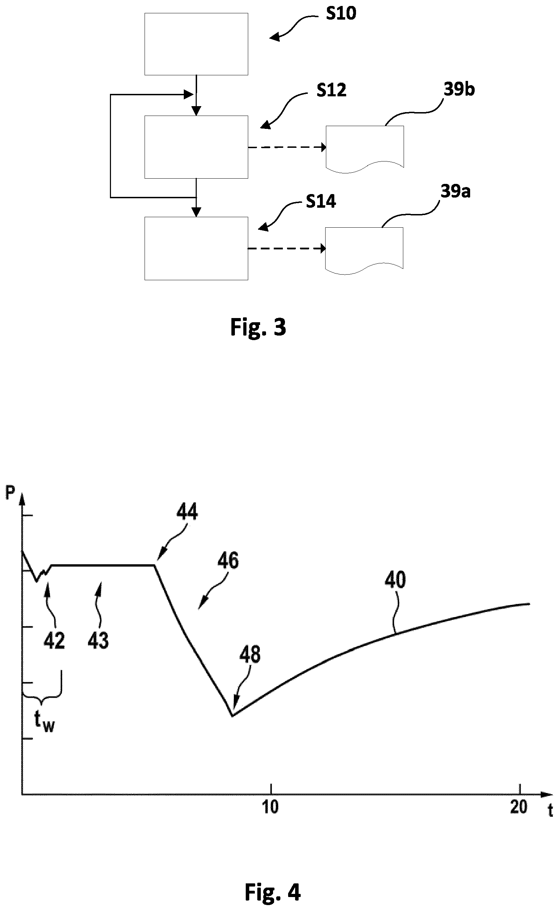

Fig. 3 shows a flow diagram for a method for aspirating the first liquid medium 20a and for transporting the first liquid medium 20a into the further sample container 36. The method may be performed by the laboratory automation device 10 controlled by the control device 34.

In step S10, the pipette 14 of the laboratory automation device 10 is lowered into the sample container 18 and the surface position $z_0$ of the surface 24 of the first liquid medium 20a is detected, such as described with respect to Fig. 2. In particular, the pipette tip 16 is moved into the container 18, until the liquid level 24 being the boundary between the first liquid medium 20a and air is reached. The liquid level 24 may be detected with a capacitive method, for example as described above.

After that, the estimated interface position $z_I$ is calculated such as described above.

In step S12, the first liquid medium 20a is aspirated from the sample container 18 with the pipette 14 by generating an underpressure in the pipette until a pipette tip 16 of the pipette 14 reaches the safety position zs. When the pipette tip 16 is immersed in the first liquid 20a, liquid is aspirated from the sample container 18 with the pipette 14 by generating an underpressure in the pipette 14 with the pump 28.

This may be done in several passes, such as described above and below. After each pass, the liquid medium 20a in the pipette 14 may be dispensed into the further sample container 36.

In step S14, when the safety position zs has been reached, a pressure 40 (see Fig. 4) in the pipette 14 is measured during lowering the pipette further into the sample container 18. A measured interface position $z_M$ of the interface 22 is detected, when a slope 44 of the pressure 40 changes. This will be described in more detail with respect to Fig. 4.

When a difference of the estimated interface position zi and the measured interface position $z_M$ is higher than a threshold, a plausibility message 39a for the interface detection is provided. The threshold may be a fixed threshold or may depend on the surface position $z_0$. For example, the controller 34 may generate data that the sample container 18 should be examined by a technician and/or should be discarded. The plausibility message 39a may contain such data.

After interface detection, a post-detection procedure may be performed. In particular, after the detection of the interface 22, the pipette 14 may be withdrawn from the sample container 18 and/or an amount of liquid medium from the pipette 14 may be dispensed such that an aspirated amount of second liquid medium 20b, and if desired a fraction of the first liquid medium 20a, is discarded.

For example, after detection of the measured interface position $z_M$, the pipette tip 16 may be stopped at the detected position and an overpressure may be generated to dispense an amount of the second aspirated liquid medium 20b and/or an amount of the first aspirated liquid medium 20a from the pipette 14.

In the end, the first liquid medium 20a in the pipette 14 may be dispensed into the further sample container 36.

It also may be that the pipette 14 moves back to the first liquid container 18 and aspirates the remaining amount of the first liquid medium 20a with interface detection between air and the first liquid medium 20a. This is possible since the position of the interface position between the first liquid medium 20a and the second liquid medium 20b is now known.

Fig. 4 shows a diagram with a pressure signal or pressure curve 40, which has been recorded during a movement of the pipette tip 16 through the interface 22. Fig. 4 is an example of a pressure signal 40, which was recorded during aspiration of blood plasma, when entering from the plasma into the erythrocytes. When the pipette tip 16 goes through the interface 22, the slope of the pressure 40 changes.

In particular, the diagram shows the time t on the horizontal axis and pressure p on the vertical axis. At time t=0, the underpressure is generated and in a first time interval 42, the first liquid medium 20a starts to enter the pipette tip 16. In this time interval 42, the pressure 40 varies, since the flow in the pipette tip 16 has not yet stabilized. After the stabilization phase in the time interval 43, the slope of the pressure 40 is constant. The volume rate of the pump 28 has been adjusted to the amount of first liquid medium 20a flowing into the pipette 14. At point 44, the pipette tip 16 enters the second liquid medium 20b, which is more viscous and/or more dense as the first liquid medium 20a and in the following time interval 46, the slope of the pressure 40 changes (it deceases). This slope change is detected by the controller 34, which then stops the pump 28 and the movement of the pipette tip 16. After the stop of the pump 28, the pressure starts to increase again.

Due to the first time interval 42, it may be beneficial to introduce a waiting time $t_w$ after starting the pump 28, before the interface detection 22 becomes active, to ignore the pressure change when the first liquid medium 20a starts to enter into the empty pipette tip 16. The fixed offset $d_2$ may be chosen in dependence of the movement speed of the pipette 14, such that the waiting time $t_w$ times the movement speed is less than the fixed offset $d_2$.

Furthermore, it may be beneficial to stop immediately the movement of the pipette tip 16 and the pump 28 upon interface detection to avoid aspiration of a large amount of the second liquid medium 20b and to minimize a contamination risk.

To further improve the interface detection, it may be beneficial, that the pipette tip 16 solely moves when the pump 28 has a constant speed and/or volume rate. If the pump 28 is in an acceleration or deceleration phase, then the interface detection may be more difficult and/or not so accurate. It may be that the pipette tip 16 is solely moved, when a pump 28 generating the underpressure operates at a constant volume rate. When the pump 28 comprises a plunger 29, the pipette 14 may be solely moved, when the plunger 29 is moved with constant speed.

Returning to Fig. 3, step S12 may be performed in several passes. Before the safety position zs is reached, the first liquid medium 20a may be aspirated from the sample container 18 in several passes, wherein during each pass, an aspiration volume is aspirated from the sample container 18 and dispensed into the further sample container 36.

The amount of first liquid medium 20a in the pipette 14 is estimated, which may be determined from the volume capacity of the pipetting tip 16 and the volume rate of the pump 28. When an aspiration volume of the pipette 14 has been filled into the pipette 14, the pipette may be withdrawn from the sample container 18 and the content of the pipette 14 may be dispensed into the second sample container 36.

At the beginning of every pass, the air-liquid interface, i.e. the level 24, may be detected, for example with a capacitive method. However, for the second and further passes, the safety position zs and/or the estimated interface position zi are not calculated any more.

During each pass, the pipette 14 is lowered into the sample container 18 until the pipette tip 16 has passed a lowering distance $l_1$ or 12, which is chosen, such that the pipette tip 16 passes the aspiration volume in the sample container 18. The aspiration volume and/or the lowering distance $l_1$ or $l_2$ of the pipette tip 16 for each pass may be chosen in dependence of the safety position zs. The sum of the lowering distances $l_1$ and $l_2$ may be chosen, such that at the end of the last pass during step S12, the safety position zs is reached.

There may be one, two or more passes during step S12. The last lowering during step S14 along a lowering distance $l_3$ which may go beyond the estimated interface position zi may be seen as a further pass. The lowering distance $l_3$ may be from the safety position zs to the estimated interface position zi subtracted by an offset, which may have the same length as the difference between the safety position zs and the estimated interface position zi.

It also may be that during step S12, interface detection takes places, i.e. the detection process of the interface 22 between the first liquid medium 20a and the second liquid medium 20b. In this case, a detected interface may indicate a problem with the sample in the sample container 18.

In other words, not only after but also before the safety position zs is reached, also a pressure 40 in the pipette 14 may be measured during the lowering of the pipette 14 and a measured interface position $z_M$ of the interface 22 may be detected, when a slope 44 of the pressure 40 changes. This may be done analogously, as described with respect to step S14.

When the interface 22 and/or the measured interface position $z_M$ is detected during step S12, i.e. before the safety position zs is reached, then a plausibility message 39b for the interface detection may be provided. As in step S14, this also may contain data indicating that there is a problem with the sample and/or that the sample should be checked by a technician.

When interface detection is performed during step S12 or step S14, a first aspiration rate during the lowering of the pipette 14 for the lowering distance $l_1$, $l_2$ and/or $l_3$ (or until the interface 22 is detected) is lower than a second aspiration rate, after the lowering distance has been passed. When the interface 22 is detected, the lowering is stopped.

In this case, the movement during the lowering may be done rather fast and/or with a speed, such that the aspirated liquid medium 20a, 20b is enough for interface detection. When the end of the lowering distance $l_1$, $l_2$ is reached, the movement may be stopped and first liquid medium 20a may be aspirated until the pipette 14 is filled up to the aspiration volume.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit, such as an FPGA, may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS AND NOMENCLATURE

| | |
|---|---|
| 10 | laboratory automation device |
| 12 | pipetting arm |
| 14 | pipette |
| 16 | pipette tip |
| 18 | sample container |
| 20a | first liquid medium |
| 20b | second liquid medium |
| 22 | interface |
| 24 | surface, liquid level (between first liquid medium and air) |
| 26 | layer |
| 28 | pressure device, pump |
| 29 | plunger |
| 30 | hose |
| 32 | pressure sensor |
| 34 | control device |
| 36 | further sample container |
| $z_o$ | surface position |
| $z_s$ | safety position |
| $z_i$ | estimated interface position |
| $z_M$ | measured interface position |
| $z_b$ | position of the bottom of the sample container |
| $d_1$ | statistical offset |
| $d_2$ | fixed offset |
| s | constant depending on a variance of the interface position |
| 38 | path |
| 39a | plausibility message |
| 39b | plausibility message |
| 40 | pressure |
| 42 | stabilizing time interval |
| 43 | constant slope time interval |
| 44 | change of pressure slope |
| 46 | constant slope interval |
| 48 | stop of pump |

| | |
|---|---|
| $t_w$ | waiting time |
| $l_1$ | first lowering distance |
| $l_2$ | second lowering distance |
| $l_3$ | third lowering distance |

**Claims**

1. A method for aspirating a first liquid medium (20a) from a sample container (18) with a laboratory automation device (10), wherein the first liquid medium (20a) is above a second liquid medium (20b), which has a higher density and/or viscosity as the first liquid medium (20a), the method comprising:

   detecting a surface position ($z_0$) of a surface (24) of the first liquid medium (20a);
   calculating an estimated interface position ($z_i$) of an interface (22) between the first liquid medium (20a) and the second liquid medium (20b) from the surface position ($z_o$) and calculating a safety position ($z_s$) between the surface position ($z_o$) and the estimated interface position ($z_i$) by adding a safety offset ($d_i$, $d_2$) to the estimated interface position ($z_i$);
   lowering a pipette (14) of the laboratory automation device (10) into the sample container (18) and aspirating the first liquid medium (20a) from the sample container (18) with the pipette (14) by generating an underpressure in the pipette until a pipette tip (16) of the pipette (14) reaches the safety position ($z_s$).

2. The method of claim 1,

   wherein the estimated interface position ($z_s$) is calculated by applying a mathematical formula to the surface position ($z_o$);
   wherein the estimated interface position ($z_s$) is linearly dependent on the surface position ($z_o$).

3. The method of claim 1 and 2,

   wherein the safety offset comprises a statistical offset ($d_i$) depending on the surface position ($z_o$);
   wherein the safety offset comprises a constant offset ($d_2$).

4. The method of one of the previous claims, wherein the surface position ($z_0$) of the surface (24) of the first liquid medium (20a) is detected capacitively and/or by measuring change of pressure via the pipette tip (16), which is lowered towards the surface (24).

5. The method of one of the previous claims, further comprising:

during lowering, when the safety position ($z_s$) has been reached, measuring a pressure (40) in the pipette (14) and detecting a measured interface position ($z_M$) of the interface (22), when a slope (44) of the pressure (40) changes.

6. The method of claim 5, further comprising:
providing a plausibility message (39a) for the interface detection, when a difference of the estimated interface position ($z_i$) and the measured interface position ($z_M$) is higher than a threshold.

7. The method of one of the previous claims, further comprising:
after detection of the measured interface position ($z_M$), stopping the pipette tip (16) at the detected position and generating overpressure to dispense an amount of the second aspirated liquid medium (20b) and/or an amount of the first aspirated liquid medium (20a) from the pipette (14).

8. The method of one of the previous claims, further comprising:
before the safety position ($z_s$) is reached, aspirating the first liquid medium (20a) from the sample container (18) in several passes, wherein during each pass, an aspiration volume is aspirated from the sample container (18) and dispensed into a further sample container (36).

9. The method of claim 8, further comprising:
before the safety position ($z_s$) is reached, measuring a pressure (40) in the pipette (14) during the lowering of the pipette (14) and detecting a measured interface position ($z_M$) of the interface (22), when a slope (44) of the pressure (40) changes.

10. The method of claim 9, further comprising:
providing a plausibility message (39b) for the interface detection, when the measured interface position ($z_M$) is detected.

11. The method of one of claims 8 to 10,

wherein during each pass, the pipette (14) is lowered into the sample container (18) until the pipette tip (16) has passed a lowering distance ($l_1$, $l_2$), which is chosen, such that the pipette tip (16) passes the aspiration volume in the sample container (18);
wherein a first aspiration rate during the lowering of the pipette (14) for the lowering distance l($l_1$, $l_2$) is lower than a second aspiration rate, after the lowering distance ($l_1$, $l_2$) has been passed.

12. The method of one of claims 8 to 11,
wherein the aspiration volume and/or a lowering distance of the pipette tip (16) for each pass are chosen in dependence of the safety position ($z_s$).

13. A computer program for aspirating a first liquid medium (20a) of two liquid media (20a, 20b) of different density and/or viscosity from a sample container (18), which computer program, when being executed by a processor, is adapted to carry out the steps of the method of one of the previous claims.

14. A computer-readable medium, in which a computer program according to claim 13 is stored.

15. A laboratory automation device (10), comprising:

a pipetting arm (12) for carrying a pipette (14);
a pressure device (28) for changing a pressure in a volume (30) connected to the pipette (14) for aspirating and dispensing a liquid medium (20a, 20b) in the pipette (14);
a pressure sensor (32) for pressure measurements in the volume (30) connected to the pipette (14);
a control device (34) for controlling the pressure device (28) und the pipetting arm (12) and for receiving a pressure signal (40) from the pressure sensor (32);
wherein the control device (34) is adapted for performing the method of one of claims 1 to 12.

**Fig. 1**

**Fig. 2**

EP 4 296 684 A1

**Fig. 3**

**Fig. 4**

12

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 296 069 A1 (YASKAWA ELECTRIC CORP [JP]) 21 March 2018 (2018-03-21) | 1-3,6,8, 11-15 | INV. G01N35/10 |
| Y | * abstract; figures 15, 16 * * paragraphs [0012], [0030], [0093] - [0111] * | 4,5,7,9, 10 | B01L3/02 G01F23/14 |
| X | EP 3 508 858 A1 (SYSMEX CORP [JP]) 10 July 2019 (2019-07-10) | 1,13-15 | |
| Y | * abstract; figure 2B * * paragraphs [0042] - [0046], [0076] * | 4,5,9,10 | |
| X | AU 664 390 B2 (ALOKA CO LTD; ABBOTT LAB) 16 November 1995 (1995-11-16) | 1,13-15 | |
| Y | * abstract; figure 4 * * page 10 * | 4,5,9,10 | |
| Y | WO 2019/060716 A1 (FREENOME HOLDINGS INC [US]) 28 March 2019 (2019-03-28) * abstract; figure 5 * * paragraphs [0071], [0072], [0096] - [0098] * | 7 | |

TECHNICAL FIELDS SEARCHED (IPC)

G01N
B01L
G01F

The present search report has been drawn up for all claims

| Place of search | Date of completion of the search | Examiner |
|---|---|---|
| The Hague | 3 December 2022 | Zarowna-Dabrowska, A |

EPO FORM 1503 03.82 (P04C01)

**EP 4 296 684 A1**

## ANNEX TO THE EUROPEAN SEARCH REPORT
## ON EUROPEAN PATENT APPLICATION NO.

EP 22 17 9855

03-12-2022

| Patent document cited in search report | | Publication date | Patent family member(s) | | Publication date |
|---|---|---|---|---|---|
| EP 3296069 | A1 | 21-03-2018 | EP | 3296069 A1 | 21-03-2018 |
| | | | JP | 6492273 B2 | 03-04-2019 |
| | | | JP | 6536263 B2 | 03-07-2019 |
| | | | JP | 2016212077 A | 15-12-2016 |
| | | | JP | WO2016181572 A1 | 15-03-2018 |
| | | | US | 2018238923 A1 | 23-08-2018 |
| | | | WO | 2016181466 A1 | 17-11-2016 |
| | | | WO | 2016181572 A1 | 17-11-2016 |
| EP 3508858 | A1 | 10-07-2019 | AU | 2018279053 A1 | 18-07-2019 |
| | | | CN | 109975565 A | 05-07-2019 |
| | | | EP | 3508858 A1 | 10-07-2019 |
| | | | JP | 7075213 B2 | 25-05-2022 |
| | | | JP | 2019120510 A | 22-07-2019 |
| | | | US | 2019204349 A1 | 04-07-2019 |
| AU 664390 | B2 | 16-11-1995 | AU | 664390 B2 | 16-11-1995 |
| | | | CA | 2121499 A1 | 29-04-1993 |
| | | | DE | 69220499 T2 | 16-10-1997 |
| | | | EP | 0608423 A1 | 03-08-1994 |
| | | | JP | 2515938 B2 | 10-07-1996 |
| | | | JP | H05107253 A | 27-04-1993 |
| | | | TW | 221670 B | 11-03-1994 |
| | | | US | 5488874 A | 06-02-1996 |
| | | | WO | 9308476 A1 | 29-04-1993 |
| WO 2019060716 | A1 | 28-03-2019 | US | 2020232894 A1 | 23-07-2020 |
| | | | WO | 2019060716 A1 | 28-03-2019 |

EPO FORM P0459

For more details about this annex : see Official Journal of the European Patent Office, No. 12/82

**EP 4 296 684 A1**

**REFERENCES CITED IN THE DESCRIPTION**

**Patent documents cited in the description**

- US 2012003731 A1